# EUROPEAN PATENT SPECIFICATION

(11) **EP 2 537 823 B1**
(45) Date of publication and mention of the grant of the patent: **02.10.2013**
(21) Application number: 11386012.6
(22) Date of filing: 23.06.2011
(51) Int. Cl.: C05F 11/00

(54) **Aminoacids of plant origin and method of production**
Aminosäuren pflanzlichen Ursprungs und Herstellungsverfahren
Acides aminés d'origine végétale et procédé de production

(43) Date of publication of application: 26.12.2012
(73) Proprietor: Ioannis Michailidis - Trade and Industrial Businesses Societe Anonyme and Co E.E., 546 26 Thessaloniki (GR)
(72) Inventor: Michailidis, Ioannis, 546 26 Thessaloniki (GR)
(74) Representative: Panagiotidou, Effimia

(56) References cited:
- CN-A- 101 139 221
- FR-A1- 2 594 120
- JP-A- 58 055 577
- JP-A- 62 099 353

## Description

The invention belongs to the field of organic fertilizers. It concerns a supplement reinforcing plant growth and its production method.

In the state of the art, a major problem of agriculture is the overuse of nitrogen based fertilizers, resulting in increased nitrate content in food, and the well-known negative impact this has on the environment and human health.

Furthermore, under intensive farming conditions (e.g. greenhouses), over-fertilizing has made the soil incapable of absorbing nutrients. Amino-acids are known to help plants absorb the appropriate and necessary nutrients from the soil.

This invention solves the problem of over-fertilizing in a natural way, as it constitutes a method of producing free L amino-acids of plant origin, the main ingredients of which are maize and wheat protein and soya. Amino-acids are a basic building block of all organisms and they are widely used as a plant growth supplement and as additives in animal feed, nutritional products and cosmetics.

There are several state of the art products containing amino-acids, the main ingredient of which is maize protein, similar to the present invention, but they also contain animal origin proteins. Such an example is EP 0560626, in which processed animal by-products are used, unlike the present method which only uses plant origin protein. Likewise, JP 2225388 uses maize germ, which is not pure protein, as well as raw materials of animal origin.

Concerning products made with plant origin amino-acids using maize protein and no protein originating from animals, such as the present method, there are many essential differences between them. For example, CN 101139221 describes a supplement for plant grown but produces a product also containing potassium and phosphorus, which may not be suitable for use at all stages of plant development. On the contrary, the present product contains only organic nitrogen and L amino-acids. The method of US 5759223 applies different stages, such as filtering and hydrating at specific rates, unlike the present method. It also produces organic fertilizer, whereas the present method produces free L amino-acids. CN 101225000 also uses ingredients of maize and wheat proteins and soya, but adopts enzymatic hydrolysis, whereas the present invention adopts acid hydrolysis. JP 2006206341 only uses maize and produces organic fertilizer rather than amino-acids. On the contrary, the present invention produces free L amino-acids derived from maize protein; it also uses wheat and soya, which leads to the production of additional amino-acids, and, therefore, a different product. CN 1339420 applies a different method, as it uses desalination, discolouration and condensation, stages which the present invention does not adopt, as well as other raw materials, such as beans, etc. Thus, in that case, the product produced is different from the product of the present invention. CA 2210511 adds phosphorus as an essential ingredient for the application of the method, and, in fact, at a specific ratio, unlike the present invention. Therefore, in this case, too, both the method and the product produced differ from those of the present invention. Finally, JP 4198080 uses microorganisms for enzymatic hydrolysis, while the present method uses the process of acid hydrolysis, which means that the applied method and also the product produced are not the same.

The present invention comprises a method for producing a supplement for plant growth which contains only free L amino-acids of plant origin. The method uses only plant origin raw materials, rich in maize and wheat proteins, as well as soy flour, at a specific ratio; these are placed in the reactor without any prior treatment. Hydrochloric acid and water are then added at a specific temperature, under specific pressure for a specific period of time. After hydrolysis, the proteins provide a solution containing 16 free L amino-acids.

The following are the advantages of the present method and the product produced:
It improves the uniformity of plants and affects their composition by reducing their nitrate content and increasing their content in soluble solids and ascorbic acid, thus significantly improving the total antioxidant effect when they are consumed.
It enhances the growth of the plant root system, an essential feature, particularly for plants that are to be replanted.
It activates the plant's natural defense organisms, making it resistant to plant diseases.
It enhances the process of photosynthesis, stimulates basic metabolic functions, increases production and improves plant productivity.
It helps the plant manage stress, for example, under extreme weather conditions.
It reduces flower shedding and improves fruit setting.
It provides the plant with the basic building blocks it needs, so it does not need to consume energy to synthesize its own.
It offers farmers the possibility of using it for the production of any nutrient mix of their choice, by mixing the product in any proportion with macro-, micro- and trace elements.
It can be used as a growth supplement for all plants.

Another advantage is that applying the method always produces a stable end-product in regard to amino acids contained and their content ratios.

Finally, another advantage is that applying the method does not produce any residue or waste, since all ingredients used in the method are used in their pure form, with no pre-treatment, at the exact ratios required. As soon as the method has been completed, the end-product is packaged as is.

Specifically, the method of producing plant origin amino-acids is the following:
Raw materials used:
   Maize gluten 20% w/w
   Wheat gluten 3.5% w/w
   Soy flour 10.5% w/w
   Hydrochloric acid 20% w/w
   Water 46% w/w

All raw materials are placed in the reactor simultaneously, without any prior preparation or processing.

The materials remain inside the reactor under conditions of continuous, steady stirring, at a temperature of 110° Celsius, at 4 atm of pressure for a period of 18 hours.

Following that, the product's PH is adjusted at 2.7-3.2.

The procedure described above results directly in producing an end-product containing free amino-acids rather than peptides. No other stage of processing ensues and the product is ready for use.

The conditions of the method as described above are ideal for producing the product desired. This method produces the same product for a temperature deviation of ±3%, i.e. from 106° to 114° Celsius, a pressure deviation of ±10%, i.e. from 3.5 to 4.5 atm and for a minimum time period of 16 and maximum of 20 hours.

The physical state of the product is liquid with a density of 1.2 g / ml, of brown to dark brown colour with the characteristic odour of the process of protein hydrolysis.

Applying the method described above always produces a stable end-product, which has the following composition in terms of percentile content (%) ratio of carbon to nitrogen [C/N]:

| | % w/w of product | N% w/w (min) | C% w/w (min) |
|---|---|---|---|
| Amino-acids | 12.5 | 1.7 | 6.1 |
| Peptides, sugars, hydrolysis residues | 20.6 | 1.3 | 5.2 |
| Water | 66.9 | | |

| | | | |
|---|---|---|---|
| Ratio C/N= 3.75 | | | |

Furthermore, plant origin amino acids at 12.5% w/w of the end-product are of the following composition:

| Name | International abbreviation Formula | Molecular Formula | g/L of product | % (w/v) of product | % (w/w) of product |
|---|---|---|---|---|---|
| Alanine | Ala | C₃H₇NO₂ | 7.0 | 0.70 | 0.59 |
| Arginine | Arg | C₆H₁₄N₄O₂ | 8.9 | 0.89 | 0.75 |
| Aspartic acid | Asp | C₄H₇NO₄ | 13.1 | 1.31 | 1.10 |
| Glutamic acid | Glu | C₅H₁₀N₂O₃ | 15.8 | 1.58 | 1.33 |
| Glycine | Gly | C₂H₅NO₂ | 3.8 | 0.38 | 0.32 |
| Histidine | His | C₆H₉N₃O₂ | 3.7 | 0.37 | 0.31 |
| Isoleucine | Ile | C₆H₁₃NO₂ | 8.9 | 0.89 | 0.75 |
| Leucine | Leu | C₆H₁₃NO₂ | 30.9 | 3.09 | 2.60 |
| Lysine | Lys | C₆H₁₄N₂O₂ | 4.6 | 0.46 | 0.39 |
| Methionine | Met | C₅H₁₁NO₂S | 3.0 | 0.30 | 0.25 |
| Phenylalanine | Phe | C₉H₁₁NO₂ | 13.5 | 1.35 | 1.13 |
| Proline | Pro | C₅H₉NO₂ | 11.3 | 1.13 | 0.95 |
| Serine | Ser | C₃H₇NO₃ | 4.1 | 0.41 | 0.34 |
| Threonine | Thr | C₄H₉NO₃ | 2.8 | 0.28 | 0.24 |
| Tyrosine | Tyr | C₉H₁₁NO₃ | 7.1 | 0.71 | 0.60 |
| Valine | Val | C₅H₁₁NO₂ | 10.0 | 1.00 | 0.84 |
| total | | | 149 | 14.9 | 12.48 |

| | | | | | |
|---|---|---|---|---|---|
| PH:2.7-3.2 | | | | | |

This preparation is used to enhance the growth of all crops (fertilizer), for every type of plant, for example, lawns, garden flowers, indoor and outdoor plants, vegetables - whether grown in greenhouses or not - nurseries, olive trees, citrus trees, apple-like fruit, stone fruit, tomatoes, beetroots, maize, cotton, grapes, potatoes, tobacco, fruit bearing or other trees. The product may be combined with most phytoprotection products and state of the art foliar fertilizers.

## Claims

1. Method for producing amino-acids of plant origin using acid hydrolysis, **characterised by** the fact that it follows the steps below:
i. the primary materials are placed in the reactor at the same time:
maize gluten 20% w/w
wheat gluten 3.5% w/w
soy flour at 10.5% w/w
hydrochloric acid 20% w/w
water 46% w/w
ii. the raw materials remain inside the reactor under conditions of continuous, steady stirring, at a temperature ranging from 106° to 114° Celsius, under pressure ranging from 3.5 to 4.5 atm for a period of time between 16 and 20 hours
iii. The PH of the product is then set at 2.7-3.2.

2. Method for producing amino-acids of plant origin using acid hydrolysis according to claim 1, **characterized by** the fact that for the ideal application of the method the raw materials remain inside the reactor under conditions of continuous, steady stirring, at a temperature of 110° Celsius, under a pressure of 4 atm for a time period of 18 hours.

3. Mixture of amino-acids of plant origin, produced according to the method of claims 1 and 2, **characterized by** the fact that it is produced with the following raw materials:
i. maize gluten 20% w/w
ii. wheat gluten 3.5% w/w
iii. soy flour at 10.5% w/w
iv. hydrochloric acid 20% w/w
v. water at 46% w/w,
by the fact that the final composition of the product is:
| | |
|---|---|
| amino-acids of plant origin | 12.5 % w/w of the product |
| peptides, sugars, hydrolysis residues | 20.6 w/w of the product |
| water | 66.9 w/w of the product |
at a density of 1.2 g/ml,
and by the fact that the amino-acids of plant origin at 12.5% w/w of the end-product are:
| | |
|---|---|
| Alanine (Ala) | 0.59 w/w of the product |
| Arginine (Arg) | 0.75 w/w of the product |
| Aspartic acid (Asp) | 1.10 w/w of the product |
| Glutamic acid (Glu) | 1.33 w/w of the product |
| Glycine (Gly) | 0.32 w/w of the product |
| Histidine (His) | 0.31 w/w of the product |
| Isoleucine (Ile) | 0.75 w/w of the product |
| Leucine (Leu) | 2.60 w/w of the product |
| Lysine (Lys) | 0.39 w/w of the product |
| Methionine (Met) | 0.25 w/w of the product |
| Phenylalanine (Phe) | 1.13 w/w of the product |
| Proline (Pro) | 0.95 w/w of the product |
| Serine (Ser) | 0.34 w/w of the product |
| Threonine (Thr) | 0.24 w/w of the product |
| Tyrosine (Tyr) | 0.60 w/w of the product |
| Valine (Val) | 0.84 w/w of the product |

## Patentansprüche

1. Methode zur Produktion von Aminosäuren pflanzlichen Ursprungs aufgrund von Säurehydrolyse, **dadurch gekennzeichnet, dass** folgende Schritte eingehalten werden:
i. die Rohstoffe werden gleichzeitig in den Reaktor eingesetzt:
Maisgluten 20% w/w
Weizengluten 3,5% w/w
Sojamehl-Gluten 10,5% w/w
Salzsäure 20% w/w
Wasser 46% w/w
ii. die Rohstoffe bleiben innerhalb des Reaktors unter kontinuierlichem, gleichmäßigem Rühren bei einer Temperatur von 106° bis 114° Celsius, unter einem Druck von 3.5 bis 4.5 atm für einen Zeitraum zwischen 16 und 20 Stunden
iii. Der PH-Wert des Produktes liegt dann bei 2.7-3.2.

2. Methode zur Produktion von Aminosäuren pflanzlichen Ursprungs aufgrund von Säurehydrolyse gemäß Patentanspruch 1, **dadurch gekennzeichnet, dass** bei der bevorzugten Umsetzung der Methode die Rohstoffe unter kontinuierlichem, gleichmäßigem Rühren bei einer Temperatur von 110° Celsius, unter einem Druck von 4 atm und für eine Zeitdauer von 18 Stunden innerhalb des Reaktor bleiben.

3. Mischung von Aminosäuren pflanzlichen Ursprungs produziert gemäß der Methode der Patentansprüche 1 und 2, **dadurch gekennzeichnet, dass** sie aus folgenden Rohstoffen produziert wird:
i. Maisgluten 20% w/w
ii. Weizengluten 3,5% w/w
iii. Sojamehl-Gluten 10,5% w/w
iv. Salzsäure 20% w/w
v. Wasser 46% w/w,
dass die endgültige Zusammensetzung des Produkts folgende ist:
| | |
|---|---|
| Aminosäuren pflanzlichen Ursprungs | 12.5% w/w des Produktes |
| Peptide, Zucker, Hydrolyse-Rückstände | 20.6% w/w des Produktes |
| Wasser | 66.9% w/w des Produktes |
bei einer Dichte von 1.2 g/ml,
und dass die Aminosäuren pflanzlichen Ursprungs von 12.5% w/w des Endproduktes sich folgenderweise zusammensetzen:
| | |
|---|---|
| Alanin (Ala) | 0,59 w/w des Produktes |
| Arginin (Arg) | 0,75 w/w des Produktes |
| Asparaginsäure (Asp) | 1,10 w/w des Produktes |
| Glutaminsäure (Glu) | 1,33 w/w des Produktes |
| Glyzin (Gly) | 0,32 w/w des Produktes |
| Histidin (His) | 0,31 w/w des Produktes |
| Isoleucin (lie) | 0,75 w/w des Produktes |
| Leucin (Leu) | 2,60 w/w des Produktes |
| Lysin (Lys) | 0,39 w/w des Produktes |
| Methionin (Met) | 0,25 w/w des Produktes |
| Phenylalanin (Phe) | 1,13 w/w des Produktes |
| Prolin (Pro) | 0,95 w/w des Produktes |
| Serin (Ser) | 0,34 w/w des Produktes |
| Threonin (Thr) | 0,24 w/w des Produktes |
| Tyrosin (Tyr) | 0,60 w/w des Produktes |
| Valin (Val) | 0,84 w/w des Produktes |

## Revendications

1. Méthode de production d'acides aminés d'origine végétale en utilisant une hydrolyse acide, **caractérisée par le fait qu'** elle résulte de la manière suivante:
i. les matières primaires sont placées dans le réacteur en même temps:
gluten de maïs 20% p/p
gluten de blé 3.5% p/p
gluten de farine de soja 10.5% p/p
acide chlorhydrique 20% p/p
eau 46% p/p
ii. les matières premières restent à l'intérieur du réacteur dans des conditions d'agitation régulière, en continu, à une température allant de 106° à 114° Celsius, sous une pression allant de 3.5 à 4.5 atmosphères pendant une période de temps comprise entre 16 et 20 heures
iii. Le pH du produit est ensuite fixé à 2.7 - 3.2.

2. Méthode de production d'acides aminés d'origine végétale en utilisant une hydrolyse acide selon la revendication 1, **caractérisé par le fait que**, pour l'application idéale de la méthode, les matières premières restent à l'intérieur du réacteur dans les conditions d'une agitation constante en continu, à une température de 110°C, sous une pression de 4 atm pendant une période de temps de 18 heures.

3. Mélange d'acides aminés d'origine végétale, fabriqués selon la méthode des revendications 1 et 2, **caractérisé par le fait qu'**il est réalisé avec des matières premières suivantes :
i. gluten de maïs 20% p/p
ii. gluten de blé 3,5% p/p
iii. gluten de farine de soja 10.5% p/p
iv. acide chlorhydrique 20% p/p
v.eau 46% p/p
**par le fait que** la composition finale du produit est la suivante :
| | |
|---|---|
| acides aminés d'origine végétale | 12.5% p/p du produit |
| peptides, sucres, résidus d'hydrolyse | 20.6% p/p du produit |
| Eau | 66.9% p/p du produit |
à une densité de 1.2 g/ml,
et **par le fait que** les acides aminés d'origine végétale à 12.5% p/p du produit final sont :
| | |
|---|---|
| Alanine (Ala) | 0.59 % p/p du produit |
| Arginine (Arg) | 0.75 % p/p du produit |
| Acide aspartique (Asp) | 1.10 % p/p du produit |
| Acide glutamique (Glu) | 1.33 % p/p du produit |
| Glycine (Gly) | 0.32 % p/p du produit |
| Histidine (His) | 0.31 % p/p du produit |
| Isoleucine (lie) | 0.75 % p/p du produit |
| Leucine (Leu) | 2.60 % p/p du produit |
| Lysine (Lys) | 0.39 % p/p du produit |
| Méthionine (Met) | 0.25 % p/p du produit |
| Phénylalanine (Phe) | 1.13 % p/p du produit |
| Proline (Pro) | 0.95 % p/p du produit |
| Serine (Ser) | 0.34 % p/p du produit |
| Thréonine (Thr) | 0.24 % p/p du produit |
| Tyrosine (Tyr) | 0.60 % p/p du produit |
| Valine (Val) | 0.84 % p/p du produit |
